# EUROPÄISCHE PATENTSCHRIFT

(11) **EP 0 687 823 B1**
(45) Veröffentlichungstag und Bekanntmachung des Hinweises auf die Patenterteilung: **16.05.2001**
(21) Anmeldenummer: 95109440.8
(22) Anmeldetag: 19.06.1995
(51) Int. Cl.: F16C 11/06

(54) **Kugelgelenk**
Ball joint
Joint à rotule

(30) Priorität: 18.06.1994 DE 4421403
(43) Veröffentlichungstag der Anmeldung: 20.12.1995
(73) Patentinhaber: TRW Fahrwerksysteme GmbH & Co. KG, 40547 Düsseldorf (DE)
(72) Erfinder: Dorr geb. Sommer, Christoph, Dipl.Ing., 40667 Meerbusch (DE)
(74) Vertreter: Stenger, Watzke & Ring Patentanwälte

(56) Entgegenhaltungen:
- DE-A- 4 211 897
- FR-A- 1 292 538
- FR-A- 2 471 510
- FR-A- 2 670 255
- US-A- 3 497 247
- US-A- 4 118 131

## Beschreibung

Die Erfindung betrifft ein Kugelgelenk aus einer mit einem Zapfen versehenen Gelenkkugel und einem vorzugsweise aus Kunststoff hergestellten Gehäuse, in dem die Gelenkkugel unmittelbar verdreh- und kippbar gelagert ist, wobei durch von der die Gehäuseöffnung umgebenden Stirnfläche des Gehäuses ausgehende, sich radial über einen Teil der Wandstärke des Gehäuses erstreckende und in axialer Richtung mindestens bis zum Äquator der kugelförmigen Lagerfläche verlaufende Schlitze eine Mehrzahl von kugelabschnittförmigen Lagerflächen im Gehäuse gebildet ist, die durch eine sie radial umgebende, von der Stirnfläche des Gehäuses ausgehende, axial verlaufende Ringnut in ihrem von der Gehäuseöffnung etwa bis zum Äquator reichenden Teil zur Aufnahme der Gelenkkugel elastisch verformbar sind und wobei in die Ringnut ein Sicherungsring eingesetzt ist, der die Lagerflächen des Gehäuses in ihrer die Gelenkkugel im Gehäuse sichernden Stellung festlegt.

Derartige Kugelgelenke mit unmittelbarer Lagerung der Gelenkkugel im Gehäuse sind bekannt. Ein gattungsgemäßes Kugelgelenk ist in der FR 2471510 A1 offenbart.

Der Erfindung liegt die Aufgabe zugrunde, diese bekannten Kugelgelenke derart weiterzubilden, daß sich bei einfachster Ausgestaltung des Gehäuses und niedriger Anzahl von Einzelteilen eine sichere und einfach zu montierende Lagerung der Gelenkkugel im Gehäuse ergibt.

Die Lösung dieser Aufgabenstellung durch die Erfindung ist dadurch gekennzeichnet, daß der Sicherungsring mit in den Schlitzen des Gehäuses verlaufenden, die Gelenkkugel umgreifenden Stegen versehen ist.

Durch die Ausbildung dieser die Gelenkkugel umgreifenden Stege wird der Sicherungsring zusammen mit der Gelenkkugel in das Gehäuse eingesetzt, wodurch er selbsttätig die Elastizität der einzelnen, im Gehäuse ausgebildeten Lagerflächen aufhebt, sobald die Gelenkkugel ihre Endposition innerhalb des Gehäuses einnimmt. Da die Stege die Gelenkkugel umgreifen, ergibt sich zwangsläufig eine Sicherung des Sicherungsringes gegen Herausfallen aus der im Gehäuse ausgebildeten Ringnut.

Gemäß einem weiteren Merkmal der Erfindung ist der Sicherungsring mit einer Verlängerung versehen, die nach der Montage aus der Ringnut des Gehäuses hervorsteht und, z.B. durch eine ringförmige Rille, zur Festlegung des gehäuseseitigen Randes eines Dichtungsbalges z.B. mit Hilfe eines Befestigungsringes dient.

Bei einer erfindungsgemäßen Weiterbildung des Gelenkes wird die nach der Montage aus der Ringnut des Gehäuses hervorstehende Verlängerung des vorzugsweise aus einem metallischen Werkstoff bestehenden Sicherungsringes radial plastisch verformt, beispielsweise gerollt oder gedrückt, wobei sie den gehäuseseitigen Rand des Dichtungsbalges zwischen sich und der zur Gehäuseöffnung hin verlängerten inneren zylindrischen Mantelfläche der Ringnut einklemmt und damit festlegt.

Insgesamt ergibt sich durch die erfindungsgemäße Bildung der bekannten Kugelgelenke ein konstruktiv einfaches Kugelgelenk mit einem einteiligen Gehäuse, dessen Lagerflächen in einzelne, teilweise elastisch verformbare Lagerflächen unterteilt ist, deren Elastizität nach Einsetzen der Gelenkkugel durch den Sicherungsring der Erfindung aufgehoben wird. Es entsteht ein sogenanntes Schnappgelenk aus wenigen Bauteilen, das besonders einfach montiert werden kann.

Sofern zwischen dem Gehäuse und dem Zapfen der Gelenkkugel ein Dichtungsbalg angeordnet werden soll, wird erfindungsgemäß weiter vorgeschlagen, den Sicherungsring mit einer eine axiale ringförmige Aufnahmenut für den gehäuseseitigen Rand eines Dichtungsbalges aufweisenden Verlängerung zu versehen. Durch Einfügen des gehäuseseitigen Randes des Dichtungsbalges in die hierfür vorgesehene Aufnahmenut am Sicherungsring wird bei der Montage der Gelenkkugel und des Sicherungsringes gleichzeitig der gehäuseseitige Rand des Dichtungsbalges am Gehäuse festgelegt, ohne daß hierzu zusätzliche Handgriffe oder Bauteile erforderlich sind. Außerdem ergibt sich durch die erfindungsgemäße Weiterbildung eine für den Balgwerkstoff spannungsarme Befestigung des Dichtungsbalges am Gehäuse und eine saubere Abrollbewegung des Dichtungsbalges bei Kippbewegungen des Kugelzapfens.

Auf den Zeichnungen sind Ausführungsbeispiele des erfindungsgemäßen Kugelgelenkes dargestellt, und zwar zeigen:
- Fig. 1: einen Längsschnitt durch ein Ausführungsbeispiel des Kugelgelenks gemäß der Erfindung,
- Fig. 2: einen Querschnitt durch das Gehäuse, gemäß der Schnittlinie IV - IV in Fig. 3,
- Fig. 3: eine Ansicht des Gehäuses nach Fig. 4 von der Gehäuseöffnung aus gesehen,
- Fig. 4: einen Schnitt durch den mit Stegen versehenen Sicherungsring nach Fig. 3,

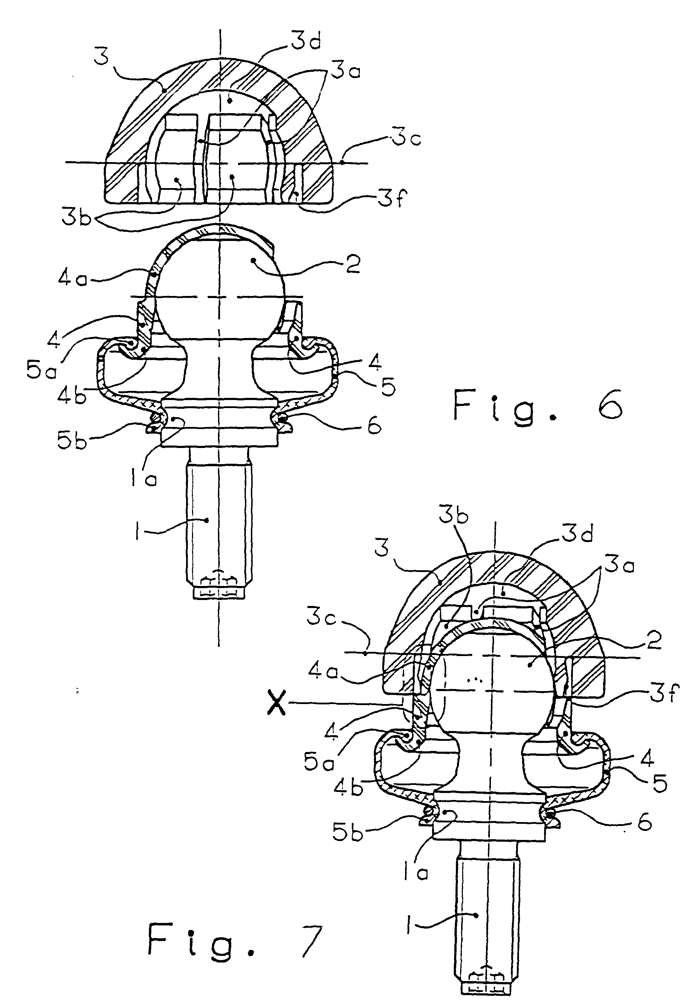

- Fig. 5: eine Draufsicht auf den Sicherungsring nach Fig. 6,
- Fig. 6: eine Schnittdarstellung des Kugelgelenks nach Fig. 3 nach einer Teilmontage,

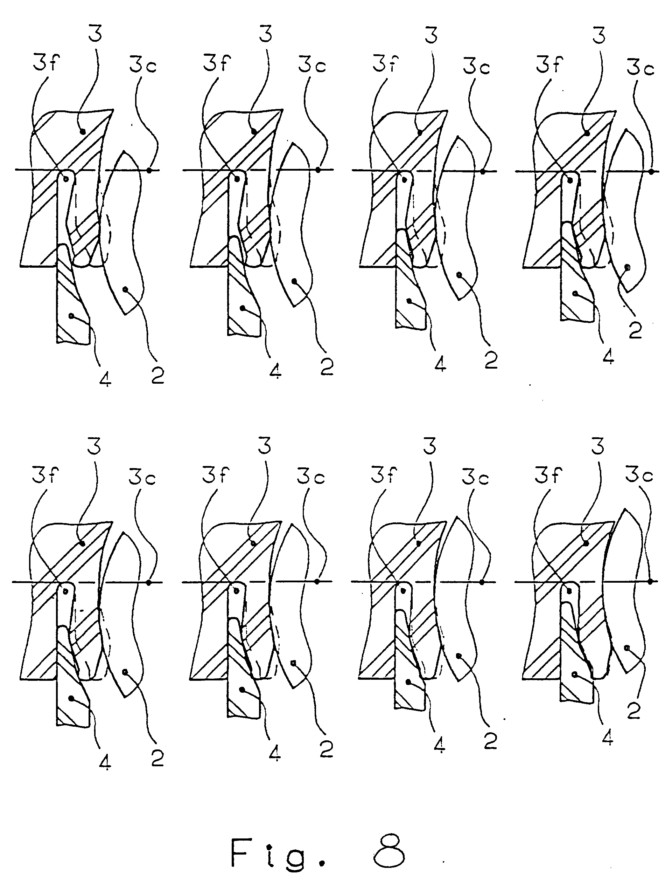

- Fig.7: eine weitere Schnittdarstellung gemäß Fig. 8 während des letzten Montageschrittes und
- Fig. 8: insgesamt acht den Fügevorgang beim Eintritt des Sicherungsringes in die Ringnut des Gehäuses zeigende Schnittdarstellungen in dem in Fig. 9 durch "X" gekennzeichneten Bereich.

Das anhand von einem Ausführungsbeispiel dargestellte Kugelgelenk umfaßt eine mit einem Zapfen 1 versehene Gelenkkugel 2 und ein aus Kunststoff hergestelltes Gehäuse 3, in dem die Gelenkkugel 2 unmittelbar verdreh- und kippbar gelagert ist.

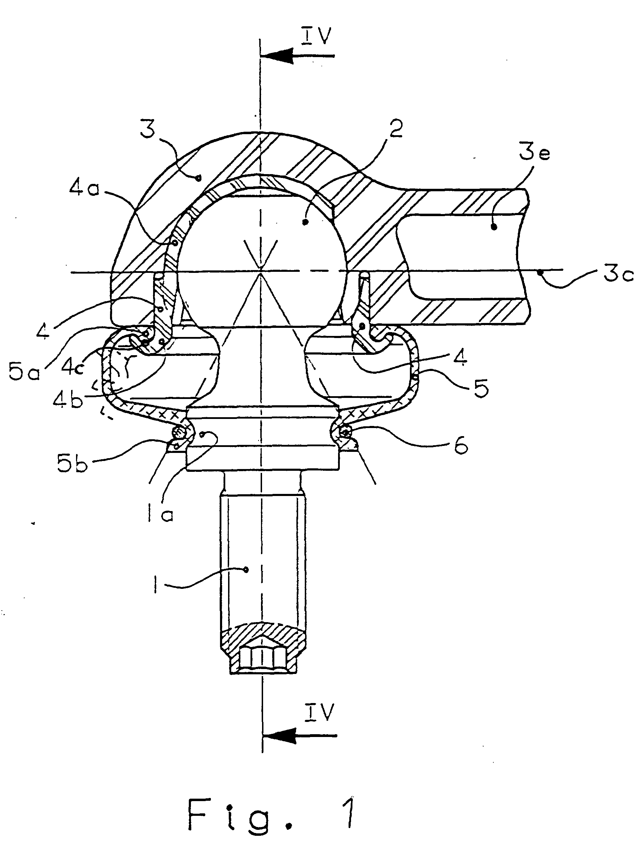

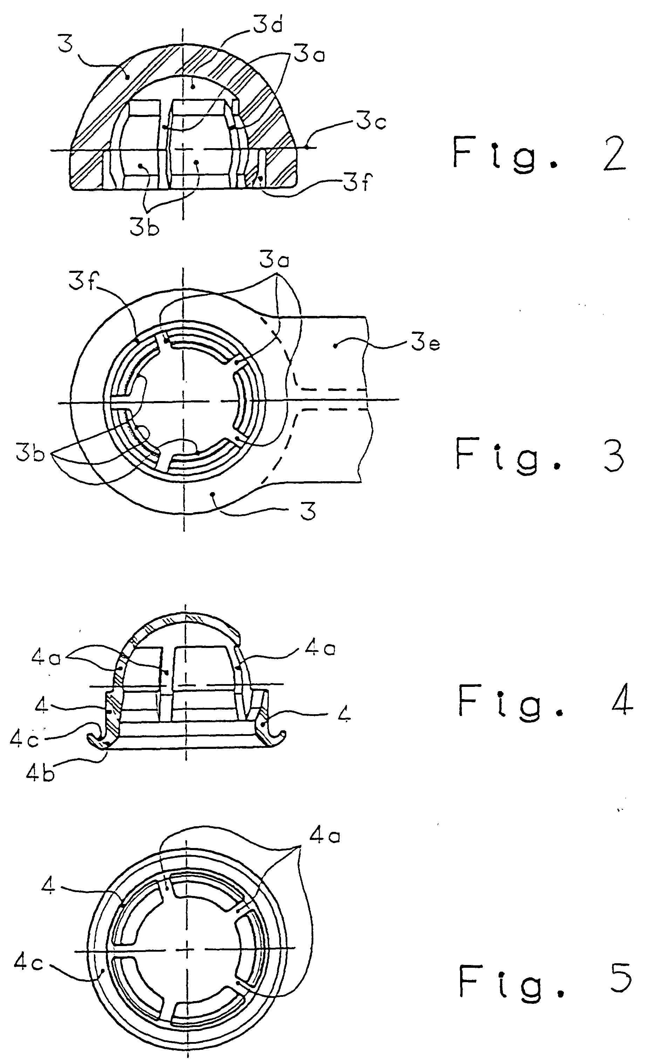

Dieses Gehäuse 3 ist auf seiner ursprünglich kugelförmigen Lagerfläche durch Schlitze 3a in eine Mehrzahl von kugelabschnittförmigen Lagerflächen 3b unterteilt. Die durch in radialer Richtung verlaufende Vertiefungen gebildeten Schlitze 3a gehen von der Öffnung des Gehäuses 3 aus und reichen mindestens bis zum Äquator der Lagerfläche. Beim Ausführungsbeispiel verlaufen sie erheblich über den beispielsweise in Fig. 2 strichpunktiert eingezeichneten Äquator 3c hinaus und münden in einem kugelkappenförmigen Hohlraum 3d. Wie die Fig. 1 und 3 erkennen lassen, ist das Gehäuse 3 beim Ausführungsbeispiel am Ende einer Strebe 3e angeformt.

Im Bereich der die Öffnung des Gehäuses 3 umgebenden Stirnfläche ist im Gehäuse 3 eine vorzugsweise bis zum Äquator 3c reichende Ringnut 3f ausgebildet. Durch diese Ringnut 3f erhalten die zwischen dem Äquator 3c und der Öffnung liegenden Teile der Lagerflächen 3b eine so große Elastizität, daß die Gelenkkugel 2 des Kugelgelenkes unter Aufweiten der entsprechenden Teile der Lagerflächen 3b in das Gehäuse 3 eingedrückt werden kann. Um die Gelenkkugel 2 in dieser Lage innerhalb des Gehäuses 3 festzuhalten, wird nach dem Einsetzen der Gelenkkugel 2 in das Gehäuse 3 ein Sicherungsring 4 in die Ringnut 3f des Gehäuses 3 eingesetzt, der die Elastizität der zwischen dem Äquator 3c und der Öffnung des Gehäuses 3 liegenden Teile der Lagerflächen 3b aufhebt.

Um diesen Sicherungsring 4 zuverlässig in seiner die Gelenkkugel 2 im Gehäuse 3 sichernden Stellung zu halten, ist er erfindungsgemäß mit in den Schlitzen 3a des Gehäuses 3 verlaufenden, die Gelenkkugel 2 umgreifenden Stegen 4a versehen. Diese einstückig mit dem Sicherungsring 4 ausgebildeten Stege 4a halten den Sicherungsring 4 gegen Herausfallen aus der Ringnut 3f fest. Durch eine entsprechende Formgebung ergibt sich eine formschlüssige Festlegung, wie am besten aus Fig. 8 hervorgeht, die in der Darstellungsart von Momentaufnahmen das Eintreten des Sicherungsringes 4 in die Ringnut 3f im Zusammenwirken mit der in das Gehäuse 3 eingeführten Gelenkkugel 2 zeigt.

Da die Gehäuseöffnung des Kugelgelenks üblicherweise durch einen Dichtungsbalg 5 abgedichtet ist, der mit seiner einen Öffnung am Gehäuse 3 und seiner anderen Öffnung in einer Nut 1a des Zapfens 1 festgelegt ist, ist der Sicherungsring 4 mit einer Verlängerung 4b versehen. Diese Verlängerung 4b kann nach der Montage aus der Ringnut 3f des Gehäuses 3 hervorstehen und eine ringförmige Rillebilden, die zur Festlegung des gehäuseseitigen Randes 5a des Dichtungsbalges 5 mit Hilfe eines Befestigungsringes dient. Hingegen kann die nach der Montage aus der Ringnut 3f des Gehäuses 3 hervorstehende Verlängerung 4b des vorzugsweise aus einem metallischen Werkstoff gefertigten Sicherungsringes 4 radial plastisch verformt werden, wobei sie den gehäuseseitigen Rand 5a des Dichtungsbalges 5 zwischen sich und der zur Gehäuseöffnung hin verlängerten inneren zylindrischen Mantelfläche der Ringnut 3f einklemmt und damit festlegt. Beim Ausführungsbeispiel schließlich ist der Sicherungsring 4 vorzugsweise aus Kunststoff gefertigt und mit einer Verlängerung 4b versehen, in der eine ringförmige Aufnahmenut 4c ausgebildet ist. Diese Aufnahmenut 4c dient zur Aufnahme des gehäuseseitigen Randes 5a des Dichtungsbalges 5, der auf diese Weise durch Einklemmen zwischen der Verlängerung 4b des Sicherungsringes 4 und der Stirnfläche des Gehäuses 3 zusammen mit dem Sicherungsring 4 am Gehäuse 3 festgelegt wird. Der zapfenseitige Rand 5b des Dichtungsbalges 5 wird beim Ausführungsbeispiel in bekannter Weise durch einen Sicherungsring 6 im Bereich der Nut 1a a am Zapfen 1 festgelegt.

Durch die voranstehend beschriebene Ausgestaltung des Gehäuses 3 wird auf einfache Weise die jeweils benötigte Elastizität der Lagerflächen 3b erzeugt, um die Gelenkkugel 2 ohne die Gefahr einer Beschädigung der Lagerflächen in das Gehäuse 3 einführen zu können. Der in die Ringnut 3f des Gehäuses 3 einzusetzende Sicherungsring 4 dient nicht nur zur Lagesicherung der im Gehäuse 3 angeordneten Gelenkkugel 2, sondern durch die Ausbildung der Verlängerung 4b der Befestigung des gehäuseseitigen Randes 5a des Dichtungsbalges 5 am Gehäuse 3. Erfindungsgemäß stellen die am Sicherungsring 4 ausgebildeten Stege 4a hierbei sicher, daß der Sicherungsring 4 nicht unbeabsichtigt aus der Ringnut 3f des Gehäuses 3 heraustreten kann.

### Bezugszeichenliste

- 1: Zapfen
- 1a: Nut
- 2: Gelenkkugel
- 3: Gehäuse
- 3a: Schlitz
- 3b: Lagerfläche
- 3c: Äquator
- 3d: Hohlraum
- 3e: Strebe
- 3f: Ringnut
- 4: Sicherungsring
- 4a: Steg
- 4b: Verlängerung
- 4c: Aufnahmenut
- 5: Dichtungsbalg
- 5a: gehäuseseitiger Rand
- 5b: zapfenseitiger Rand
- 6: Befestigungsring

## Patentansprüche

1. Kugelgelenk aus einer mit einem Zapfen (1) versehenen Gelenkkugel (2) und einem vorzugsweise aus Kunststoff hergestellten Gehäuse (3), in dem die Gelenkkugel (2) unmittelbar verdreh- und kippbar gelagert ist, wobei
durch von der die Gehäuseöffnung umgebenden Stirnfläche des Gehäuses (3) ausgehende, sich radial über einen Teil der Wandstärke des Gehäuses (3) erstreckende und in axialer Richtung mindestens bis zum Äquator (3c) der kugelförmigen Lagerfläche verlaufende Schlitze (3a) eine Mehrzahl von kugelabschnittförmigen Lagerflächen (3b) im Gehäuse (3) gebildet ist, die durch eine sie radial umgebende, von der Stirnfläche des Gehäuses (3) ausgehende, axial verlaufende Ringnut (3f) in ihrem von der Gehäuseöffnung etwa bis zum Äquator (3c) reichenden Teil zur Aufnahme der Gelenkkugel (2) elastisch verformbar sind
und wobei in die Ringnut (3f) ein Sicherungsring (4) eingesetzt ist, der die Lagerflächen (3b) des Gehäuses (3) in ihrer die Gelenkkugel (2) im Gehäuse (3) sichernden Stellung festlegt,
**dadurch gekennzeichnet,**
daß der Sicherungsring (4) mit in den Schlitzen (3a) des Gehäuses (3) verlaufenden, die Gelenkkugel (2) umgreifenden Stegen (4a) versehen ist.

2. Kugelgelenk nach Anspruch 1 mit einem zwischen dem Gehäuse (3) und dem Zapfen (1) angeordneten Dichtungsbalg, dadurch gekennzeichnet, daß der Sicherungsring (4) mit einer Verlängerung (4b) versehen ist, die zur Festlegung des gehäuseseitigen Randes (5a) des Dichtungsbalges (5) dient.

3. Kugelgelenk nach Anspruch 2, dadurch gekennzeichnet, daß der Sicherungsring (4) aus einem plastisch verformbaren Werkstoff hergestellt und der gehäuseseitige Rand (5a) des Dichtungsbalges (5) durch radiale plastische Verformung der Verlängerung (4b) des Sicherungsringes (4) zwischen der Verlängerung (4b) des Sicherungsringes (4) und der zur Gehäuseöffnung hin verlängerten inneren zylindrischen Mantelfläche der Ringnut (3f) eingeklemmt festgelegt ist.

4. Kugelgelenk nach Anspruch 2, dadurch gekennzeichnet, daß die Verlängerung (4b) des Sicherungsringes (4) mit einer ringförmigen Aufnahmenut (4c) für den gehäuseseitigen Rand (5a) des Dichtungsbalges (5) versehen ist.

5. Kugelgelenk nach mindestens einem der Ansprüche 1 bis 4, dadurch gekennzeichnet, daß der Sicherungsring (4) aus Kunststoff hergestellt ist.

## Claims

1. Ball-and-socket joint consisting of a joint ball (2) provided with a pin (1) and of a housing (3) which is preferably made of plastic and in which the joint ball (2) is directly mounted in a rotatable and tiltable manner, a plurality of spherical-segment-shaped bearing surfaces (3b) being formed in the housing (3) by slots (3a) which start from the end face of the housing (3) surrounding the housing opening, extend radially over part of the wall thickness of the housing (3) and run in the axial direction at least up to the equator (3c) of the spherical bearing surface, and these spherical-segment-shaped bearing surfaces (3b), for accommodating the joint ball (2), are elastically deformable due to an axially running annular groove (3f) in their part extending from the housing opening approximately up to the equator (3c), the annular groove (3f) surrounding the spherical-segment-shaped bearing surfaces (3b) and starting from the end face of the housing (3), and a retaining ring (4) being inserted into the annular groove (3f), this retaining ring (4) fixing the bearing surfaces (3b) of the housing (3) in their position securing the joint ball (2) in the housing (3), characterized in that the retaining ring (4) is provided with webs (4a) running in the slots (3a) of the housing (3) and enclosing the joint ball (2) .

2. Ball-and-socket joint according to Claim 1, having a sealing bellows arranged between the housing (3) and the pin (1), characterized in that the retaining ring (4) is provided with an extension (4b) which serves to secure the housing-side margin (5a) of the sealing bellows (5).

3. Ball-and-socket joint according to Claim 2, characterized in that the retaining ring (4) is made of a plastically deformable material, and the housing-side margin (5a) of the sealing bellows (5), by radial plastic deformation of the extension (4b) of the retaining ring (4), is secured in such a way as to be gripped between the extension (4b) of the retaining ring (4) and the inner cylindrical lateral surface, extended towards the housing opening, of the annular groove (3f).

4. Ball-and-socket joint according to Claim 2, characterized in that the extension (4b) of the retaining ring (4) is provided with an annular location groove (4c) for the housing-side margin (5a) of the sealing bellows (5).

5. Ball-and-socket joint according to at least one of Claims 1 to 4, characterized in that the retaining ring (4) is made of plastic.

## Revendications

1. Joint à rotule, consistant en une sphère d'articulation (2) pourvue d'un axe (1) et en un logement (3), fabriqué de préférence en une matière plastique et dans lequel est montée la sphère d'articulation (2) de manière à pouvoir directement tourner et basculer, et dans lequel il est formé, par des fentes (3a), qui partent de la face frontale du logement (3), entourant l'ouverture du logement, qui s'étendent radialement sur une partie de l'épaisseur de paroi du logement (3) et qui vont, dans le sens axial au moins jusqu'à l'équateur (3c) de la surface d'appui de forme sphérique, une pluralité de surfaces d'appui (3b) dans le logement (3), qui sont élastiquement déformables pour recevoir la sphère d'articulation (2), du fait d'une rainure annulaire (3f), qui les entoure radialement et qui part de la surface frontale du logement (3) pour s'étendre axialement, dans leur partie s'étendant depuis l'ouverture du logement jusqu'à à peu près l'équateur (3c),
et dans lequel un circlips (4) est inséré dans la rainure annulaire (3f) pour maintenir les surfaces d'appui (3b) du logement (3) dans leur position de retenue de la sphère d'articulation (2) dans le logement (3),
caractérisé en ce que
le circlips (4) est pourvu de barrettes (4a) qui s'étendent dans les fentes (3a) du logement (3) et qui entourent la sphère d'articulation (2).

2. Joint à rotule selon la revendication 1, comportant un soufflet d'étanchéité, disposé entre le logement (3) et l'axe (1), caractérisé en ce que le circlips (4) est pourvu d'un prolongement (4b), qui sert à immobiliser le bord (5a) du soufflet d'étanchéité (5), du côté logement.

3. Joint à rotule selon la revendication 2,
caractérisé en ce que le circlips (4) est fabriqué à partir d'un matériau plastiquement déformable, et en ce que le bord (5a) du soufflet d'étanchéité (5), du côté logement, est immobilisé du fait d'une déformation plastique radiale du prolongement (4b) du circlips (4), en étant serré entre le prolongement (4b) du circlips (4) et la surface d'enveloppe cylindrique interne, prolongée vers l'ouverture du logement, de la rainure annulaire (3f).

4. Joint à rotule selon la revendication 2,
caractérisé en ce que le prolongement (4b) du circlips (4) est pourvu d'une rainure annulaire de réception (4c) pour le bord (5a) du soufflet d'étanchéité (5), situé du côté logement.

5. Joint à rotule selon au moins l'une des revendications 1 à 4, caractérisé en ce que le circlips (4) est fabriqué en une matière plastique.
